# EUROPEAN PATENT APPLICATION

(11) **EP 4 557 437 A1**
(43) Date of publication of application: **21.05.2025**
(21) Application number: 22962623.9
(22) Date of filing: 29.12.2022
(51) Int. Cl.: H01M 10/058, H01M 4/13, H01M 50/593

(54) **ELECTRODE ASSEMBLY, BATTERY CELL, BATTERY, AND ELECTRIC DEVICE**

(30) Priority: 21.10.2022 CN 202222788856 U
(71) Applicant: Contemporary Amperex Technology (Hong Kong) Limited, Hong Kong (HK)
(72) Inventor: WANG, Manman, Ningde City, Fujian 352100 (CN); WANG, Yiheng, Ningde City, Fujian 352100 (CN); GE, Xiaoming, Ningde City, Fujian 352100 (CN); FAN, Yulei, Ningde City, Fujian 352100 (CN)
(74) Representative: Kraus & Lederer PartGmbB
(86) International application number: PCT/CN2022/143534
(87) International publication number: WO 2024/082448

(57) **Abstract**

The present application provides an electrode assembly, a battery cell, a battery, and an electrical device, and relates to the technical field of batteries. The battery cell includes a positive electrode sheet, a negative electrode sheet and an insulation layer. The positive electrode sheet includes a coating layer. The negative electrode sheet includes a porous current collector and a first tab connected to at least one end of the porous current collector. Along a thickness direction of the porous current collector, the porous current collector and the coating layer are arranged facing each other, and along a first direction, the porous current collector has an extension section beyond the coating layer, where the first direction is perpendicular to the thickness direction of the porous current collector. The insulation layer is disposed corresponding to the extended section, and along the thickness direction of the porous current collector, the projection of the insulation layer on the porous current collector covers part or all of the extended section. The insulation layer can block lithium ions detached from the coating layer, reducing the phenomenon of the lithium ions entering and depositing in the extension section, and It can also block the lithium metal dendrites formed in the extension section, reduce the risk of the separator being pierced, and improve the safety of the electrode assembly.

## Description

### Cross Reference to Related Applications

The present application claims priority to the Chinese patent application with the filing number 202222788856.2 filed on October 21, 2022 and entitled "Liquid Outpouring Method and Liquid Outpouring Device", the contents of which are incorporated herein by reference in entirety.

### Technical Field

The present application relates to the field of battery technology, and in particular, to an electrode assembly, a battery cell, a battery, and an electrical device.

### Background Art

In recent years, new energy vehicles have developed with a great leap. In the field of electric vehicles, power batteries play an irreplaceable and important role as power sources of the electric vehicles. With the vigorous promotion of new energy vehicles, the demand for power battery products is increasing. As a core component of new energy vehicles, batteries have high requirements in terms of service life, safety, or the like. A battery cell of a battery is obtained by assembling a positive electrode sheet, a negative electrode sheet and a separator into an electrode assembly (bare cell) in a winding or laminating manner, then putting the bare cell into a shell, and injecting an electrolytic solution. However, battery cells in existing technologies are prone to safety hazards such as short-circuiting during later use, resulting in significant usage risks of the battery cells.

### Summary

Embodiments of the present application provide an electrode assembly, a battery cell, a battery, and an electrical device, which can effectively improve the safety of a battery cell.

In a first aspect, an embodiment of the present application provides an electrode assembly, comprising a positive electrode sheet, a negative electrode sheet and an insulation layer. The positive electrode sheet includes a coating layer. The negative electrode sheet includes a porous current collector and a first tab connected to at least one end of the porous current collector. Along a thickness direction of the porous current collector, the porous current collector and the coating layer are arranged facing each other, and along a first direction, the porous current collector has an extension section beyond the coating layer, where the first direction is perpendicular to the thickness direction of the porous current collector. The insulation layer is disposed corresponding to the extended section, and along the thickness direction of the porous current collector, the projection of the insulation layer on the porous current collector covers part or all of the extended section.

In the foregoing technical solution, the negative electrode sheet of electrode assembly is provided with a porous current collector and a first tab protruding at least one end of the porous current collector. By setting the porous current collector of the negative electrode sheet to face the coating layer of the positive electrode sheet in the thickness direction of the porous current collector, and setting the porous current collector in the first direction to extend out of the coating layer, that is, the porous current collector covers the coating layer it faces, the risk of lithium precipitation during the use of the electrode assembly can be effectively alleviated. In addition, by correspondingly setting an insulation layer on the extension section of the porous current collector beyond the coating layer, that is, the insulation layer is provided in the area where the porous current collector is not bound by the expansion force of the coating layer of the positive electrode sheet, and the projection of the insulation layer in the thickness direction of the porous current collector covers part or all of the extension section, the insulation layer can have a certain blocking effect on the lithium ions precipitated on the coating layer, effectively reducing the lithium ions entering the extension section of the porous current collector, so as to alleviate the situation of growth of lithium metal dendrites caused by the deposition of lithium metal in the extension section of porous current collector. Moreover, the insulation layer can have a certain barrier effect on the lithium metal dendrites formed on the extension section, to alleviate the phenomenon of lithium metal dendrites piercing the separator, so as to further effectively alleviate the short circuiting phenomenon of the negative electrode sheet and the positive electrode sheet due to the lithium metal dendrites, thereby reducing the safety hazards of the electrode assembly during use.

In some embodiments, along the thickness direction of the porous current collector, the projection of the insulation layer completely covers the extension section.

In the foregoing technical solution, by projecting the insulation layer in the thickness direction of the porous current collector to cover the entire extension section of the porous current collector, the extension section of the porous current collector beyond the coating layer are correspondingly covered by the insulation layer, so as to effectively improve the blocking effect of the insulation layer on the lithium ions, further reducing the lithium ions entering the extension section of the porous current collector, so as to alleviate the phenomenon of lithium ions entering the extension section of the porous current collector for deposition, and improve the blocking effect of the insulation layer on the lithium metal dendrites in the extension section, further alleviating the phenomenon of the lithium metal dendrites deposited in the extension section piercing the separator, and further reducing the short-circuit risk of the positive electrode sheet and the negative electrode sheet, so as to improve the use safety of the electrode assembly.

In some embodiments, along the thickness direction of the porous collector, the insulation layer does not overlap with the coating layer.

In the foregoing technical solution, by setting the insulation layer to not overlap with the coating layer of the positive electrode sheet, the phenomenon of reduced capacity of the electrode assembly due to the excessive area of the porous current collector covered by the insulation layer, which is conducive to ensuring the capacitance and usage performance of the electrode assembly.

In some embodiments, along the thickness direction of the porous current collector, the insulation layer is provided on the side of the extension section facing the coating layer.

In the foregoing technical solution, by setting the insulation layer on the side of the extension section facing the coating layer, the insulation layer can cover the extension section of the porous current collector. The electrode component of this structure enables the insulation layer to better block the lithium metal dendrites deposited in the extension section while blocking the lithium ions detached from the coating layer, so as to reduce the risk of the separator being pierced by the lithium metal dendrites deposited in the extension section, thereby alleviating the short-circuit phenomenon caused by the lithium metal dendrites between the positive electrode sheet and the negative electrode sheet, and improving the use safety of electrode assembly.

In some embodiments, the insulation layer is connected to the surface of the extension section facing the coating layer.

In the foregoing technical solution, by connecting the insulation layer to the extension section of the porous current collector facing the surface of the coating layer, the electrode assembly of this structure can ensure the coverage effect of the insulation layer on the extension section of the porous current collector, reducing poor coverage effect due to the phenomenon of misalignment between the insulation layer and the extension section, so as to enhance the effect of the insulation layer blocking the lithium ions detached from coating layer from entering the extension section of porous current collector, suppressing the growth of the lithium metal dendrites in the extension section, and providing a good barrier effect on the lithium metal dendrites deposited in the extension section, so as to reduce the risk of the separator being pierced by the lithium metal dendrites.

In some embodiments, the electrode assembly further includes an separator. The separator is set between the negative electrode sheet and the positive electrode sheet to separate the negative electrode sheet from the positive electrode sheet. The insulation layer is connected to the surface of the separator facing the extension section.

In the foregoing technical solution, by setting the separator between the positive electrode sheet and the negative electrode sheet, and connecting the insulation layer to the separator, the insulation layer can cover the extension section of the porous current collector. This structure of the electrode components is easy to achieve, and can effectively reduce the assembly difficulty of the insulation layer. Moreover, the strength of the separator can be further enhanced through the insulation layer, so as to alleviate the phenomenon of the lithium metal dendrites deposited in the extension section piercing the separator, which is conducive to reducing the short-circuit risk of electrode assembly.

In some embodiments, both sides of the extension section in the thickness direction of the porous current collector are provided with the insulation layers.

In the foregoing technical solution, by setting the insulation layers on both sides of the extension section along the thickness direction of the porous current collector, the insulation layers can cover both sides of the extension sections in the thickness direction of the porous current collector. On the one hand, it can block lithium ions from both sides of the extension section to reduce the phenomenon of lithium ions entering the extension section for deposition, and on the other hand, it can block the lithium metal dendrites deposited on both sides of extension section, so as to further alleviate the risk of the separator being pierced by the lithium metal dendrites, and thus further improving the use safety of the electrode assembly.

along the thickness direction of the porous current collector, the thickness of the insulation layer is D₁, satisfying 1 µm ≤ D₁ ≤ 10 µm.

In the foregoing technical solution, By setting the thickness of the insulation layer on the side of the extension section in the thickness direction of the porous current collector to 1 µm to 10 µm, on the one hand, it can alleviate the phenomenon of the insulation layer having poor blocking effect on the lithium ions and the lithium metal dendrites due to the thickness of the insulation layer being too small, and can also alleviate the problem of excessive manufacturing difficulty due to the thickness of the insulation layer being too small; and on the other hand, it can alleviate the phenomenon of the gap between the coating layer and the porous collector being too large due to the thickness of the insulation layer being too large, effectively alleviating the phenomenon of excessive internal resistance and lithium deposition in the electrode assembly.

In some embodiments, the insulation layer covers the surface of at least part of the metal of the extension section.

In the foregoing technical solution, by setting the insulation layer to cover the surface of at least part of the metal of the extension section, that is to say, the insulation layer is filled in the extension section, so that the insulation layer can cover the metal of the extension section, thereby achieving that the insulation layer covers the extension section of the porous current collector. The electrode assembly using this structure can have a good barrier effect on the lithium ions through the insulation layer, so as to alleviate the phenomenon of the lithium ion deposition after contacting the metal of the extension section, thereby reducing the phenomenon of the growth of the lithium metal dendrites in the extension section, further reducing the risk of short-circuiting between the positive electrode sheet and the negative electrode sheet.

In some embodiments, the extension section has a first surface facing the coating layer, and along the thickness direction of the porous current collector, the insulation layer extends from the first surface to the interior of the extension section.

In the foregoing technical solution, by setting the insulation layer as a structure that extends from the first surface of the extension section to the interior of the extension section, the insulation layer can cover the metal on the first surface of the extension section, so as to suppress the phenomenon of lithium metal deposition after contacting with the lithium ions on the first surface of the extension section, and it can also have a certain barrier effect on the lithium metal dendrites deposited inside the extension section, thereby further improving the use safety of the electrode assembly.

In some embodiments, the extension section has first surfaces on both sides of the thickness direction of the porous current collector, and the extension section is provided with two insulation layers, which extend from the two first surfaces to the interior of the extension section.

In the foregoing technical solution, by setting the insulation layers on both first surfaces along the thickness direction of the porous current collector in the extension section, and extending the two insulation layers from the interior of the extension section along the thickness direction of the porous current collector, the insulation layers can cover both sides of the extension section in the thickness direction of the porous current collector. On one hand, it can suppress the phenomenon of lithium metal deposition on the two first surfaces of extension section after contacting with the lithium ions, so as to alleviate the growth of the lithium metal dendrites on the two first surfaces of the extension section in the thickness direction of the porous current collector; and on the other hand, it can block the lithium metal dendrites deposited inside the extension section from both sides of the extension section, so as to further alleviate the risk of the separator being pierced by the lithium metal dendrites, and thereby further improving the use safety of the electrode assembly.

In some embodiments, along the thickness direction of the porous current collector, the extension depth of the insulation layer is D₂, and the thickness of the extension section is D₃, satisfying: 1 µm ≤ D₂ ≤ D₃/2.

In the foregoing technical solution, by setting the extension depth of the insulation layer within the extension section between 1 µm and half of the thickness of the extension section, on the one hand, it can alleviate the problem of lithium metal dendrites deposited on the extension section easily growing and extending beyond the first surface due to the insufficient extension depth of the insulation layer, and also alleviate the large manufacturing difficulty due to the extension depth of the insulation layer being too small; and on the other hand, it can alleviate the phenomenon of interference between the insulation layers set on both sides of the extension section due to the excessive extension depth of the insulation layer, and reduce the waste of the insulation layer.

In some embodiments, along the first direction, both ends of the porous current collector have extension sections, and each extension section corresponds to an insulation layer.

In the foregoing technical solution, the porous current collector forms extension sections at both ends in the first direction, that is, both ends of the porous current collector in the first direction extend beyond the coating layer, thereby on the one hand, ensuring the coverage effect of the porous current collector on the coating layer in the thickness direction of the porous current collector, alleviating the lithium deposition phenomenon of the electrode assembly; and on the other hand, by setting insulation layers on both ends of the porous current collector beyond the extension section of the coating layer, it can provide a certain coverage effect on both ends of the porous current collector, so as to alleviate the phenomenon of lithium metal dendrites depositing at both ends of the porous current collector.

In some embodiments, the elastic modulus of the insulation layer is E, satisfying E ≥ 1Gpa.

In the foregoing technical solution, an insulation layer with an elastic modulus greater than or equal to 1 GPa is used, and this insulation layer has good strength and toughness. On the one hand, it can effectively reduce the occurrence of damage to the insulation layer during use, thereby improving the service life of the electrode assembly; and on the other hand, it can have a good blocking effect on the lithium metal dendrites, which is conducive to reducing the phenomenon of the insulation layer being pierced by the lithium metal dendrites, thereby effectively reducing the risk of using the battery cell.

In some embodiments, the insulation layer is an insulating tape or an insulating coating.

In the foregoing technical solution, the Insulation tape or the insulation coating is used as the insulation layer to cover the extension section of the porous current collector. In this structure, the insulation layer only needs to be bonded or coated on the extension section of the porous current collector, which is convenient for assembling the electrode assembly and beneficial for improving the production efficiency of the electrode assembly.

In some embodiments, along the thickness direction of the porous current collector, the maximum thickness of the first tab is smaller than the thickness of the porous current collector.

In the foregoing technical solution, by setting the maximum thickness of the first tab in the thickness direction of the porous current collector to be less than the thickness of the porous current collector, on the one hand, it facilitates the subsequent assembly and connection of the first tab with other components, and on the other hand, in the production process of the electrode assembly, when setting the porous current collector of the negative electrode sheet to have an extension section beyond the coating layer in the first direction, it is convenient to effectively distinguish the porous current collector and the first tab, so as to improve the manufacturing accuracy of the electrode assembly.

In some embodiments, the porous current collector is integrated with the first tab which is connected to the end of the extension section in the first direction away from the coating layer. The first tab includes a main section and a transition section. Along the first direction, the transition section is connected between the main section and the extension section, and the thickness of the transition section in the thickness direction of the porous current collector gradually increases from the end near the main section to the end near the extension section.

In the foregoing technical solution, by setting the porous current collector and the first tab as an integrated structure, the first tab is formed with the main body section and the transition section which is connected between the main body section and the extension section of the porous current collector, wherein the thickness of the transition section in the thickness direction of the porous current collector gradually increases from the end near the main body section to the end near the extension section of the porous current collector, so that the first tab can protrude from one end of the porous current collector. The negative electrode sheet adopting this structure can effectively improve the structural strength of the first tab and the connection strength between the first tab and the porous current collector.

In some embodiments, the porous current collector and the first tab are in separate structures. The first tab is connected to the side of the extension section in the thickness direction of the porous current collector, and along the first direction, the first tab protrudes from the end of the extension section away from the coating layer.

In the foregoing technical solution, by setting the porous current collector and the first tab as separate structures, and connecting the first tab to the extension section of the porous current collector on the side of the porous current collector in the thickness direction, and then protruding from the end of the extension section away from the coating layer along the first direction, the first tab protrudes from the end of the porous current collector. The manufacturing difficulty of the negative electrode sheet in this structure is relatively low, which is conducive to improving the production efficiency of the electrode assembly.

In some embodiments, the electrode assembly is a winding electrode assembly, and the first direction is consistent with a direction of a winding axis of the electrode assembly.

In the foregoing technical solution, by setting the electrode assembly in a winding structure, and aligning the first direction with the direction of the winding axis of the electrode assembly, the electrode assembly with this structure is easy to manufacture and produce, which is conducive to reducing the phenomenon of misalignment between the positive electrode sheet and the negative electrode sheet.

In some embodiments, the porous current collector is made of foam metal.

In the foregoing technical solution, the porous current collector made of the foam metal enables the porous current collector to have the function of directly reacting with the lithium ions, so as to realize the electric energy input or output of the negative electrode sheet. Moreover, the porous current collector with this structure can realize the deposition of the lithium ions inside the porous current collector, which is conducive to reducing the risk of the lithium metal deposition on the surface of the porous current collector.

In a second aspect, an embodiment of the present application further provides a battery cell, including a shell and the foregoing electrode assembly, where the electrode assembly is accommodated in the shell.

In a third aspect, an embodiment of the present application further provides a battery, including the foregoing battery cell.

In a fourth aspect, an embodiment of the present application further provides an electrical device, including the foregoing battery cell.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle provided in some embodiments of the present application;
FIG. 2 is a structural exploded view of a battery provided in some embodiments of the present application;
FIG. 3 is a structural exploded view of a battery cell provided in some embodiments of the present application;
FIG. 4 is a cross-sectional view of an electrode assembly provided in some embodiments of the present application;
FIG. 5 is a partial cross-sectional view of an electrode assembly provided in some embodiments of the present application;
FIG. 6 is a partial enlarged view at A of the electrode assembly shown in FIG. 5;
FIG. 7 is a cross-sectional view of a positive electrode sheet of the electrode assembly provided in some embodiments of the present application in some other embodiments;
FIG. 8 is a cross-sectional view of a negative electrode sheet of the electrode assembly provided in some embodiments of the present application;
FIG. 9 is a partial cross-sectional view of the electrode assembly provided in still other embodiments of the present application;
FIG. 10 is a partial enlarged view at B of the electrode assembly shown in FIG. 9;
FIG. 11 is a cross-sectional view of a negative electrode sheet of the electrode assembly provided in still other embodiments of the present application;
FIG. 12 is a cross-sectional view of a negative electrode sheet of the electrode assembly provided in still other embodiments of the present application in some other embodiments;
FIG. 13 is a partial cross-sectional view of the electrode assembly provided in still other embodiments of the present application;
FIG. 14 is a partial enlarged view at C of the electrode assembly shown in FIG. 13;
FIG. 15 is a partial cross-sectional view of the electrode assembly provided in some other embodiments of the present application;
FIG. 16 is a partial enlarged view at D of the electrode assembly shown in FIG. 15;
FIG. 17 is a partial cross-sectional view of the electrode assembly provided in some further embodiments of the present application; and
FIG. 18 is a partial enlarged view at E of the electrode assembly shown in FIG. 17.

Reference numerals: 1000 - vehicle; 100 - battery; 10 - box; 11 - first box body; 12 - second box body; 20 - battery cell; 21 - shell; 211 - shell body; 2111 - opening; 212 - end cover; 22 - electrode assembly; 221 - negative electrode sheet; 2211 - porous current collector; 2211a - extension section; 2211b - first surface; 2212 - first tab; 2212a - main section; 2212b - transition section; 2213 - welding mark; 222 - separator; 223 - positive electrode sheet; 2231 - coating layer; 2231a - positive electrode active material layer; 2231b - insulting protective layer; 2232 - matrix; 2232a - second tab; 224 - insulator; 200 - controller; 300 - motor; X - first direction; Y - thickness direction of the porous current collector.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells or a plurality of battery modules. The box may prevent liquid or other foreign matters from affecting charging or discharging of the battery cells.

The battery cell includes a shell, an electrode assembly and an electrolytic solution, where the shell is used for accommodating the electrode assembly and the electrolytic solution. The electrode assembly consists of a positive electrode sheet, a negative electrode sheet, and a separator. The battery cell mainly relies on migration of metal ions between the positive electrode sheet and the negative electrode sheet to work. The positive electrode sheet includes a positive electrode current collector and a positive electrode active material layer, a surface of the positive electrode current collector is coated with the positive electrode active material layer, and a portion, not coated with the positive electrode active material layer, of the positive electrode current collector serves as a positive tab to input or output electrical energy of the positive electrode sheet. In an example of a lithium-ion battery, a material of the positive electrode current collector may be aluminum, and the positive electrode active material may be lithium cobaltate, lithium iron phosphate, ternary lithium, lithium manganate, or the like. The negative electrode sheet may be made of a foam metal. In order to ensure that no fusing occurs when high current passes through, there is a plurality of positive tabs laminated together, and there is a plurality of negative tabs laminated together.

A material of the separator may be polypropylene (PP), polyethylene (PE), or the like. Moreover, the electrode assembly may be of a wound structure or a laminated structure, and the embodiments of the present application are not limited thereto.

Batteries are an important part of the development of new energy nowadays due to their outstanding advantages such as high energy density, low environmental pollution, high power density, long service life, wide adaptability, and small self-discharge coefficient. A battery cell of a battery is obtained by assembling a positive electrode sheet, a negative electrode sheet and a separator into an electrode assembly (bare cell) in a winding or laminating manner, then putting the bare cell into a shell, closing the bare cell with an end cover, and injecting an electrolytic solution. However, with the continuous development of battery technology, higher requirements are put forward for the performance, safety, and the like of batteries. Therefore, the safety performance of the battery cell determines the safety of the battery during use.

The inventor found, for the ordinary battery cell, the electrode assembly of the battery cell is prone to lithium precipitation during later use of the battery, mainly manifested as lithium metal precipitation on the negative electrode sheet of the electrode assembly, which often leads to expansive deformation of the negative electrode sheet or deposition of dendritic crystals on the surface, causing damage to the separator or a risk of expansion of the battery cell. In order to solve use safety problems caused by the precipitation of lithium metal from the negative electrode sheet, foam metal is used as the negative electrode sheet of the electrode assembly, and the width of the negative electrode sheet is set to be greater than the positive electrode sheet, so as to achieve deposition of lithium metal inside the negative electrode sheet while reducing the risk of lithium deposition in electrode components. However, in the battery cell in this structure, since the negative electrode sheet of the foam metal is not bound by the expansion force at the part beyond the positive electrode sheet, and the pressure on the entire negative electrode sheet is uneven, it is extremely easy for lithium metal dendrites to grow infinitely, causing the separator of the electrode assembly to be pierced by the lithium metal dendrites, resulting in short-circuit phenomenon of the positive electrode sheet and negative electrode sheet, thus causing significant safety hazards in the later use of battery cell, which is not conducive to the safety of consumer use.

, so that the battery cell has significant safety hazards during later use and is not conducive to the use safety of consumers.

Based on the above considerations, in order to solve the significant safety hazards of the battery cell during the later use, the inventor has conducted in-depth research and designed an electrode assembly, including a positive electrode sheet, a negative electrode sheet and an insulation layer. The positive electrode sheet includes a coating layer. The negative electrode sheet includes a porous current collector and a first tab connected to at least one end of the porous current collector. Along a thickness direction of the porous current collector, the porous current collector and the coating layer are arranged facing each other, and along a first direction, the porous current collector has an extension section beyond the coating layer, where the first direction is perpendicular to the thickness direction of the porous current collector. The insulation layer is disposed corresponding to the extended section, and along the thickness direction of the porous current collector, the projection of the insulation layer on the porous current collector covers part or all of the extended section.

In the foregoing technical solution, the negative electrode sheet of electrode assembly is provided with a porous current collector and a first tab protruding at least one end of the porous current collector. By setting the porous current collector of the negative electrode sheet to face the coating layer of the positive electrode sheet in the thickness direction of the porous current collector, and setting the porous current collector in the first direction to extend out of the coating layer, that is, the porous current collector covers the coating layer it faces, the risk of lithium precipitation during the use of the electrode assembly can be effectively alleviated. In addition, by correspondingly setting an insulation layer on the extension section of the porous current collector beyond the coating layer, that is, the insulation layer is provided in the area where the porous current collector is not bound by the expansion force of the coating layer of the positive electrode sheet, and the projection of the insulation layer in the thickness direction of the porous current collector covers part or all of the extension section, the insulation layer can have a certain blocking effect on the lithium ions precipitated on the coating layer, effectively reducing the lithium ions entering the extension section of the porous current collector, so as to alleviate the situation of growth of lithium metal dendrites caused by the deposition of lithium metal in the extension section of porous current collector. Moreover, the insulation layer can have a certain barrier effect on the lithium metal dendrites formed on the extension section, to alleviate the phenomenon of lithium metal dendrites piercing the separator, so as to further effectively alleviate the short circuiting phenomenon of the negative electrode sheet and the positive electrode sheet due to the lithium metal dendrites, thereby reducing the safety hazards of the electrode assembly during use.

The negative electrode sheet disclosed in the embodiments of the present application may be used, but not limited to, in an electrical device, such as a vehicle, a ship, or an aircraft. A power system of the electrical device may be constituted by the negative electrode sheet, the battery cell, and the like disclosed in the present application, which can effectively reduce the risk of short-circuiting or expansion of the battery cell during later use, so as to improve the safety of use of the battery.

An embodiment of the present application provides an electrical device using a battery as a power source. The electrical device may be, but is not limited to, a mobile phone, a tablet computer, a notebook computer, an electric toy, an electric tool, a scooter, an electric vehicle, a ship, or a spacecraft. The electric toy may include a fixed or mobile electric toy, such as a game console, an electric car toy, an electric ship toy, or an electric aircraft toy. The spacecraft may include an airplane, a rocket, a space shuttle, a spaceship, or the like.

For convenient description, the following embodiments are described by an example of a vehicle 1000 as an electrical device in an embodiment of the present application.

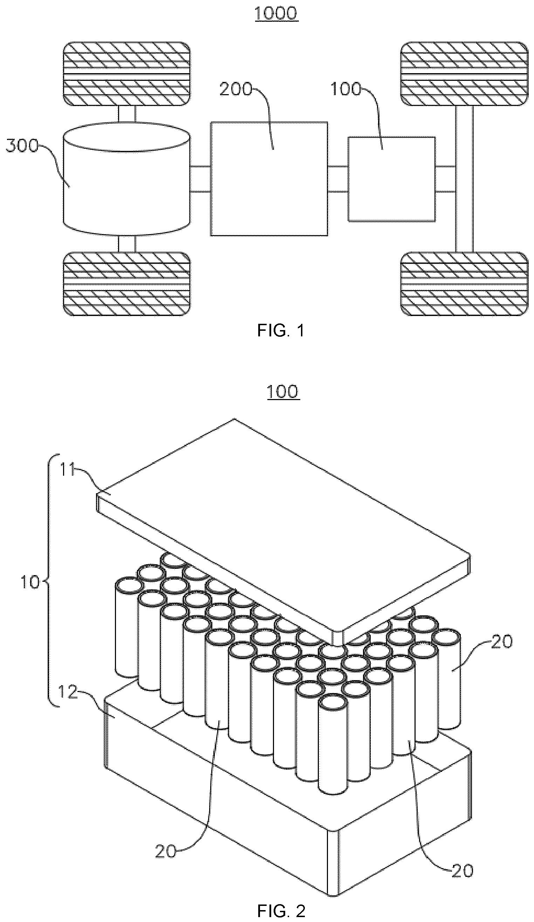

Refer to FIG. 1. FIG. 1 is a schematic structural diagram of a vehicle 1000 provided in some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be configured to supply power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to FIG. 2. FIG. 2 is a structural exploded view of a battery 100 provided in some embodiments of the present application. The battery 100 includes a box 10 and battery cells 20, where the battery cells 20 are accommodated in the box 10. The box 10 is used for providing an assembly space for the battery cells 20, and the box 10 may have many structures. In some embodiments, the box 10 may include a first box body 11 and a second box body 12, the first box body 11 and the second box body 12 cover each other, and the first box body 11 and the second box body 12 jointly confine the assembly space for accommodating the battery cells 20. The second box body 12 may be of a hollow structure with an open end, the first box body 11 may be of a plate-like structure, and the first box body 11 covers an open side of the second box body 12, so that the first box body 11 and the second box body 12 jointly confine the assembly space; or each of the first box body 11 and the second box body 12 may be of a hollow structure with an open side, and the open side of the first box body 11 covers the open side of the second box body 12. Of course, the box 10 formed by the first box body 11 and the second box body 12 may be in various shapes, such as cylindrical or cuboid.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box 10. The battery 100 may further include other structures, for example, the battery 100 may further include a current collecting component for achieving electrical connection between the plurality of battery cells 20.

Each battery cell 20 may be a secondary battery or a primary battery, or may be a lithium-sulfur battery, a sodium-ion battery, or a magnesium-ion battery, but is not limited to this. The battery cell 20 may be cylindrical, flat, cuboid, or in other shapes. For example, in FIG. 2, the battery cell 20 is of a cylindrical structure.

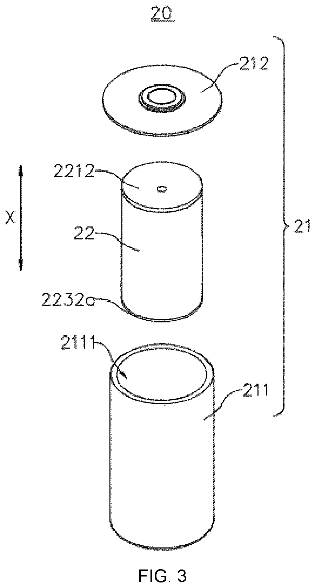

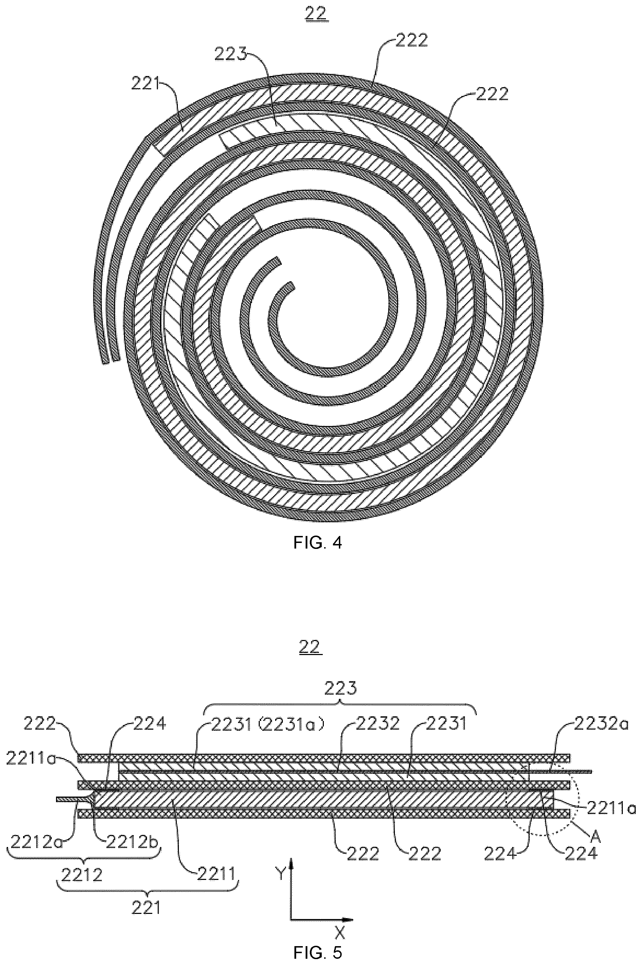

Refer to FIGs. 3 and 4. FIG. 3 is a structural exploded view of a battery cell 20 provided in some embodiments of the present application, and FIG. 4 is a cross-sectional view of an electrode assembly provided in some embodiments of the present application. The battery cell 20 includes a shell 21 and an electrode assembly 22, where the shell 21 is used for accommodating the electrode assembly 22.

The shell 21 may also be used for accommodating an electrolyte, such as an electrolytic solution. The shell 21 may be in various structural forms. The shell 21 can also be made of various materials, such as copper, iron, aluminum, steel, aluminum alloy, etc.

In some embodiments, the shell 21 may include a shell body 211 and an end cover 212, the shell body 211 is of a hollow structure with an opening 2111 on one side, and the end cover 212 covers the opening 2111 of the shell body 211 and forms a sealed connection, so as to form a sealed space for accommodating the electrode assembly 22 and the electrolyte.

When the battery cell 20 is assembled, the electrode assembly 22 is first put into the shell body 211, the shell body 211 is filled with the electrolyte, and then the cover body 212 covers the opening 2111 of the shell body 211.

The shell body 211 may be in various shapes, such as cylindrical or cuboid. The shape of the shell body 211 may be determined according to a specific shape of the electrode assembly 22. For example, if the electrode assembly 22 is of a cylindrical structure, a cylindrical shell body may be used; or if the electrode assembly 22 is of a cuboid structure, a cuboid shell body may be used. Certainly, the end cover 212 may also be of various structures, for example, the end cover 212 is of a plate-like structure, a hollow structure with an opening 2111 at one end, and the like. For example, in FIG. 3, the electrode assembly 22 is of a cylindrical structure. Correspondingly, the shell body 211 is of a cylindrical structure, the end cover 212 is of a cylindrical plate-like structure, and the end cover 212 covers the opening 2111 of the shell body 211.

In some embodiments, the battery cell 20 may further include a positive electrode terminal and a negative electrode terminal, where the positive electrode terminal is mounted on the end cover 212, and the negative electrode terminal is mounted on the end of the shell body 211 opposite to the end cover 212. Certainly, it is also possible that the positive electrode terminal is mounted on the end of the end cover 212 opposite to the shell body 211, and the negative electrode terminal is mounted on the end cover 212. Both the positive electrode terminal and the negative electrode terminal are used to electrically connect with the electrode assembly 22, so as to realize the input or output of electric energy of the battery cell 20 . The positive electrode terminal and the negative electrode terminal may be directly connected to the electrode assembly 22, for example, by welding or abutting, etc. The positive electrode terminal and the negative electrode terminal may also be indirectly connected to the electrode assembly 22, for example, the positive electrode terminal and the negative electrode terminal are in contact with or welded to the electrode assembly 22 through the current collection member.

Understandably, the shell 21 is not limited to the above structure. The shell 21 may alternatively be of other structures. For example, the shell 21 includes a shell body 211 and two end covers 212, the shell body 211 is of a hollow structure with openings 2111 on two opposite sides, and one end cover 212 covers one opening 2111 of the shell body 211 correspondingly and forms a sealed connection, so as to form a sealed space for accommodating the electrode assembly 22 and the electrolyte.

In some embodiments, the battery cell 20 may also include a pressure relief mechanism, which may be mounted on the end cover 212 or the shell body 211. The pressure relief mechanism is used to release the pressure inside the battery cell 20 when the internal pressure or temperature of the battery cell 20 reaches a predetermined value.

For example, the pressure relief mechanism 25 may be a component such as an explosion-proof valve, a rupture disc, a gas valve, a pressure relief valve, or a safety valve.

It should be noted that the electrode assembly 22 is a component that undergoes electrochemical reactions in the battery cell 20. The electrode assembly 22 may include a negative electrode sheet 221, a separator 222, and a positive electrode sheet 223. The electrode assembly 22 may be of a wound structure formed by winding the negative electrode sheet 221, the separator 222, and the positive electrode sheet 223, or a laminated structure formed by laminating the negative electrode sheet 221, the separator 222, and the positive electrode sheet 223. For example, in FIG. 4, the electrode assembly 22 is of a wound structure formed by winding the negative electrode sheet 221, the separator 222, and the positive electrode sheet 223.

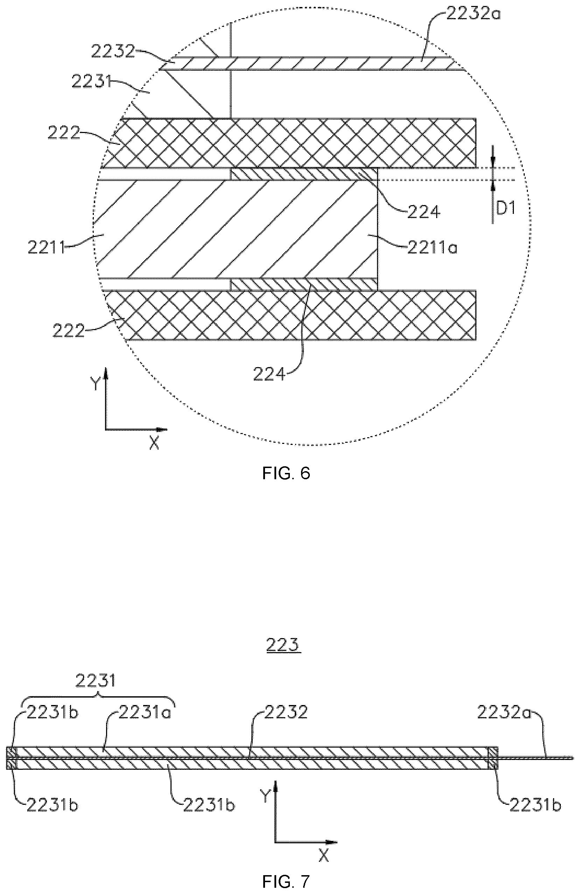

According to some embodiments of the present application, refer to FIG 4 and further refer to FIGs. 5 and 6, where FIG. 5 is a partial cross-sectional view of an electrode assembly 22 provided in some embodiments of the present application, and FIG. 6 is a partial enlarged view at A of the electrode assembly 22 shown in FIG. 5. The present application provides an electrode assembly 22, which includes a positive electrode sheet 223, a negative electrode sheet 221 and an insulation layer 224. The positive electrode sheet 223 includes a coating layer 2231. The negative electrode sheet 221 includes a porous current collector 2211 and a first tab 2212 connected to at least one end of the porous current collector 2211. Along a thickness direction Y of the porous current collector, the porous current collector 2211 and the coating layer 2231 are arranged facing each other, and along a first direction X, the porous current collector 2211 has an extension section 2211a beyond the coating layer 2231, where the first direction is perpendicular to the thickness direction Y of the porous current collector. The insulation layer 224 is disposed corresponding to the extended section 2211a. Along the thickness direction Y of the porous current collector, the projection of the insulation layer 224 on the porous current collector 2211 covers part or all of the extended section 2211a.

The positive electrode sheet 223 further includes a matrix 2232. Along the thickness direction Y of the porous current collector, the coating layer 2231 is disposed on at least one side of the base 2232, and along the first direction X, the portion of the matrix 2232 beyond the coating layer 2231 forms the second tab 2232a. The second tab 2232a serves as the positive output electrode of the electrode assembly 22. The second tab 2232a is used to be connected to the positive electrode terminal, so as to realize the input or output of electric energy of the electrode assembly 22. For example, in FIG. 5, coating layers 2231 are provided on both sides of the base 2232.

The matrix 2232 can be made of a variety of materials, such as copper, iron, aluminum, steel, aluminum alloy, etc.

Optionally, as shown in FIG. 5, the coating layer 2231 includes a positive active material layer 2231a. The positive active material layer 2231a and the porous current collector 2211 of the negative electrode sheet 221 are the areas where chemical reactions occur in the battery cell 20, and it mainly relies on movement of metal ions between the positive active material layer 2231a and the porous current collector 2211 to work. Certainly, in some embodiments, referring to FIG. 7, which is a cross-sectional view of the positive electrode sheet 223 of the electrode assembly 22 provided in some embodiments of the present application in other embodiments, the coating layer 2231 may further include an insulating protective layer 2231b, which is provided on at least one end of the positive electrode active material layer 2231a along the first direction, so as to protect and separate the positive active material layer 2231a. The insulating protective layer 2231b can be made of plastic, rubber or silicone. For example, in FIG. 7, the coating layer 2231 includes two insulating protective layers 2231b, which are respectively located at both ends of the positive electrode active material layer 2231a in the first direction X, and are connected to the positive electrode active material layer 2231a. It should be noted that in some embodiments, for example, as shown in FIG. 5, the insulating protective layer 2231b may not be provided at one end of the positive active material layer 2231a in the first direction X, that is, the coating layer 2231 only includes the positive electrode active material layer 2231a.

Exemplarily, the positive electrode active material layer 2231a may be made of lithium cobaltate, lithium iron phosphate, ternary lithium, lithium manganate, or the like

In some embodiments, the porous current collector 2211 of the negative electrode sheet 221 is of a structure with multiple pores, which can be a foam metal or a mesh structure woven from metal wires.

The first tab 2212 is connected to at least one end of the porous current collector 2211, that is, the first tab 2212 is connected to at least one end of the porous current collector 2211 in the thickness direction Y perpendicular to the porous current collector. The first tab 2212 may be connected to one end of the porous current collector 2211, or both ends of the porous current collector 2211 may be connected to the first tab 2212. The first tab 2212 serves as the negative output electrode of the electrode assembly 22, and the first tab 2212 is used to be connected to the negative electrode terminal, so as to realize the input or output of electric energy of the electrode assembly 22.

Exemplarily, in FIG. 5, the first tab 2212 is connected to the end of the porous current collector 2211 in the first direction, that is, the first tab 2212 is connected to the end of the extension section 2211a of the porous current collector 2211 away from the coating layer 2231 in the first direction. It should be noted that the first tab 2212 is connected to the end of the porous current collector 2211 in the first direction X. The first tab 2212 may be connected to the end of the porous current collector 2211 in the first direction X, or may be connected to the side of the porous current collector 2211 facing the coating layer 2231 in the thickness direction Y of the porous current collector, and it is only necessary that the first tab 2212 extends along the first direction X and protrudes from the end of the porous current collector 2211 in the first direction X. That is to say, the first tab 2212 may be connected to the end of the extension section 2211a away from the coating layer 2231 in the first direction X, or may be connected to the side of the extension section 2211a facing the coating layer 2131 in the thickness direction Y of the porous current collector, and it is only necessary that the first tab 2212 extends along the first direction X and protrudes from the end of the extension section 2211a away from the coating layer 2231 in the first direction X.

It should be noted that in FIGs. 3, 4 and 5, the electrode assembly 22 is a winding structure, the thickness direction Y of the porous current collector is the radial direction of the electrode assembly 22. The first direction X is the width direction of negative electrode sheet 221, and is also the extension direction of the winding central axis of the electrode assembly 22. Certainly, the first direction X can also be the winding direction of the electrode assembly 22, that is, the first direction X is the extension direction of the negative electrode sheet 221. When the first direction X is the extension direction of the negative electrode sheet 221, the first direction X is perpendicular to the thickness direction Y of the porous current collector means that the tangent line in the first direction X at the point where the first direction X intersects the thickness direction Y of the porous current collector is perpendicular to the thickness direction Y of the porous current collector. In some embodiments, if the electrode assembly 22 is of a laminated structure, that is, the negative electrode sheet 221 and the positive electrode sheet 223 are of an alternately stacked structure along the thickness direction Y of the porous current collector, then in such an embodiment, the first direction X may be the width direction of the negative electrode sheet 221 or the length direction of the negative electrode sheet 221.

Along the thickness direction Y of the porous current collector, the porous current collector 2211 and the coating layer 2231 are arranged facing each other, that is, the negative electrode sheet 221 and the positive electrode sheet 223 are stacked in the thickness direction Y of the porous current collector, so that the coating layer 2231 arranged on one side of the matrix 2232 can be disposed facing the porous current collector 2211.

Along the first direction X, the porous current collector 2211 has an extension section 2211a beyond the coating layer 2231, that is, the porous current collector 2211 has portions extending out of the coating layer 2231 in the first direction X, and this part is the extension section 2211a. For example, in FIG. 5, along the first direction, both ends of the coating layer 2231 extends out of the coating layer 2231, that is, the extension section 2211a is formed at both ends of the porous current collector 2211 in the first direction X.

The insulation layer 224 is arranged corresponding to the extension section 2211a. Along the thickness direction Y of the porous current collector, the projection of the insulation layer 224 on the porous current collector 2211 covers part or all of the extension section4 2211a, that is, in the thickness direction Y of the porous current collector, the insulation layer 224 can cover at least part of the extension section 2211a. That is to say, in the thickness direction Y of the porous current collector, the projection of the insulation layer 224 on the porous current collector 2211 can cover part of the extension section 2211a, or cover the entire extension section 2211a. The insulation layer 224 can be assembled in a variety of ways. For example, the insulation layer 224 can be connected to the extension section 2211a of the porous current collector 2211, or can be connected to separator 222 between the positive electrode sheet 223 and the negative electrode sheet 221. When the insulation layer 224 is connected to the extension section 2211a, the insulation layer 224 can be disposed on the surface of the extension section 2211a facing the coating layer 2231, or can be disposed within the extension section 2211a, that is, the insulation layer 224 fills the extension section 2211a.

The negative electrode sheet 221 of electrode assembly 22 is provided with a porous current collector 2211 and a first tab 2212 protruding at least one end of the porous current collector 2211. By setting the porous current collector 2211 of the negative electrode sheet 221 to face the coating layer 2231 of the positive electrode sheet 223 in the thickness direction Y of the porous current collector, and setting the porous current collector 2211 in the first direction X to extend out of the coating layer 2231, that is, the porous current collector 2211 covers the coating layer 2231 it faces, the risk of lithium precipitation during the use of the electrode assembly 22 can be effectively alleviated. In addition, by correspondingly setting an insulation layer 224 on the extension section 2211a of the porous current collector 2211 beyond the coating layer 2231, that is, the insulation layer 224 is provided in the area where the porous current collector 2211 is not bound by the expansion force of the coating layer 2231 of the positive electrode sheet 223, and the projection of the insulation layer 224 in the thickness direction Y of the porous current collector covers part or all of the extension section 2211a, the insulation layer 224 can have a certain blocking effect on the lithium ions precipitated on the coating layer 2231, effectively reducing the lithium ions entering the extension section 2211a of the porous current collector 2211, so as to alleviate the situation of growth of lithium metal dendrites caused by the deposition of lithium metal in the extension section 2211a of porous current collector 2211. Moreover, the insulation layer 224 can have a certain barrier effect on the lithium metal dendrites formed on the extension section 2211a, to alleviate the phenomenon of lithium metal dendrites piercing the separator 222, so as to further effectively alleviate the short circuiting phenomenon of the negative electrode sheet 221 and the positive electrode sheet 223 due to the lithium metal dendrites, thereby reducing the safety hazards of the electrode assembly 22 during use.

According to some embodiments of the present application, as shown in FIGs. 5 and 6, along the thickness direction Y of the porous current collector, the projection of the insulation layer 224 completely covers the extension section 2211a.

Herein, the projection of the insulation layer 224 completely covers the extension section 2211a, that is, in the thickness direction Y of the porous current collector, the insulation layer 224 can cover the entire extension section 2211a of the porous current collector 2211, that is, the area of the porous current collector 2211 beyond the coating layer 2231 of the positive electrode sheet 223 in the first direction X is covered by the insulation layer 224.

By projecting the insulation layer 224 in the thickness direction Y of the porous current collector to cover the entire extension section 2211a of the porous current collector 2211, the extension section 2211a of the porous current collector 2211 beyond the coating layer 2231 are correspondingly covered by the insulation layer 224, so as to effectively improve the blocking effect of the insulation layer 224 on the lithium ions, further reducing the lithium ions entering the extension section 2211a of the porous current collector 2211, so as to alleviate the phenomenon of lithium ions entering the extension section 2211a of the porous current collector 2211 for deposition, and improve the blocking effect of the insulation layer 224 on the lithium metal dendrites in the extension section 2211a, further alleviating the phenomenon of the lithium metal dendrites deposited in the extension section 2211a piercing the separator 222, and further reducing the short-circuit risk of the positive electrode sheet 223 and the negative electrode sheet 221, so as to improve the use safety of the electrode assembly 22.

In some embodiments, still as shown in FIGs. 5 and 6, along the thickness direction Y of the porous collector, the insulation layer 224 does not overlap with the coating layer 2231.

Herein, the insulation layer 224 does not overlap with the coating layer 2231, that is, the insulation layer 224 does not extend between the coating layer 2231 and the porous current collector 2211 in the thickness direction Y of the porous current collector, that is to say, the insulation layer 224 only covers the area where the porous current collector 2211 extends out of the coating layer 2231 in the first direction X.

By setting the insulation layer 224 to not overlap with the coating layer 2231 of the positive electrode sheet 223, the phenomenon of reduced capacity of the electrode assembly 22 due to the excessive area of the porous current collector 2211 covered by the insulation layer 224, which is conducive to ensuring the capacitance and usage performance of the electrode assembly 22.

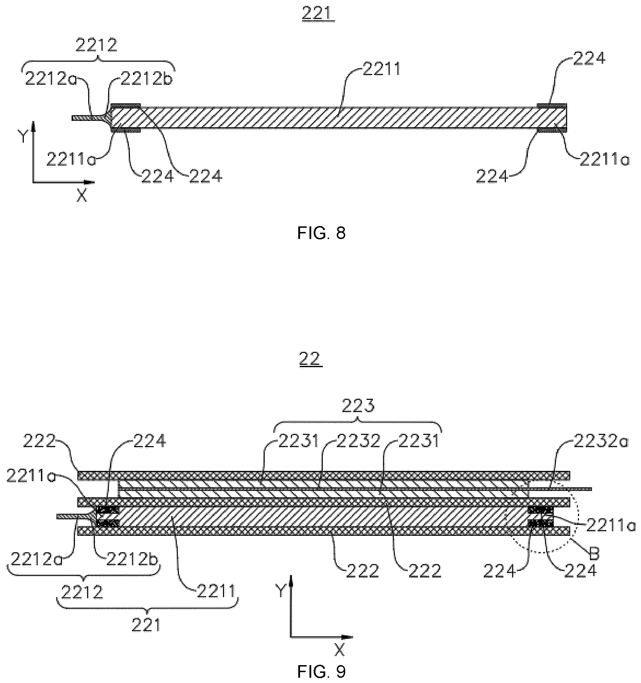

According to some embodiments of the present application, refer to FIGs. 5 and 6, and further refer to FIG. 8, which is a cross-sectional view of a negative electrode sheet of the electrode assembly provided in some embodiments of the present application. Along the thickness direction Y of the porous current collector, the insulation layer 224 is provided on the side of the extension section 2211a facing the coating layer 2231.

Herein, the insulation layer 224 is provided on the side of the extension section 2211a facing the coating layer 2231, that is, the insulation layer 224 is located between the extension section 2211a and the separator 222 in the thickness direction Y of the porous current collector. In this embodiment, the insulation layer 224 can be connected to the extension section 2211a or to the separator 222.

By setting the insulation layer 224 on the side of the extension section 2211a facing the coating layer 2231, the insulation layer 224 can cover the extension section 2211a of the porous current collector 2211. The electrode component 22 of this structure enables the insulation layer 224 to better block the lithium metal dendrites deposited in the extension section 2211a while blocking the lithium ions detached from the coating layer 2231, so as to reduce the risk of the separator 222 being pierced by the lithium metal dendrites deposited in the extension section 2211a, thereby alleviating the short-circuit phenomenon caused by the lithium metal dendrites between the positive electrode sheet 223 and the negative electrode sheet 221, and improving the use safety of electrode assembly 22.

In some embodiments, as shown in FIG. 8, the insulation layer 224 is connected to the surface of the extension section 2211a facing the coating layer 2231.

Herein, the insulation layer 224 can be connected to the surface of the extension section 2211a in various ways. For example, the insulation layer 224 can be connected to the surface of the extension section 2211a through bonding, adsorption, or the like.

By connecting the insulation layer 224 to the extension section 2211a of the porous current collector 2211 facing the surface of the coating layer 2231, the electrode assembly 22 of this structure can ensure the coverage effect of the insulation layer 224 on the extension section 2211a of the porous current collector 2211, reducing poor coverage effect due to the phenomenon of misalignment between the insulation layer 224 and the extension section 2211a, so as to enhance the effect of the insulation layer 224 blocking the lithium ions detached from coating layer 2231 from entering the extension section 2211a of porous current collector 2211, suppressing the growth of the lithium metal dendrites in the extension section 2211a, and providing a good barrier effect on the lithium metal dendrites deposited in the extension section 2211a, so as to reduce the risk of the separator 222 being pierced by the lithium metal dendrites.

In some embodiments, as shown in FIG. 5, the electrode assembly 22 further includes an separator 222. The separator 222 is set between the negative electrode sheet 221 and the positive electrode sheet 223 to separate the negative electrode sheet 221 from the positive electrode sheet 223. The insulation layer 224 is connected to the surface of the separator 222 facing the extension section 2211a.

Herein, the insulation layer 224 can be connected to the surface of the separator 222 facing the extension section 2211a in various ways. For example, the insulation layer 224 can be connected to the surface of the separator 222 facing the extension section 2211a through bonding, adsorption, or the like.

For example, the material of the separator 222 can be polypropylene (PP), polyethylene (PE), or the like.

By setting the separator 222 between the positive electrode sheet 223 and the negative electrode sheet 221, and connecting the insulation layer 224 to the separator 222, the insulation layer 224 can cover the extension section 2211a of the porous current collector 2211. This structure of the electrode components 22 is easy to achieve, and can effectively reduce the assembly difficulty of the insulation layer 224. Moreover, the strength of the separator 222 can be further enhanced through the insulation layer 224, so as to alleviate the phenomenon of the lithium metal dendrites deposited in the extension section 2211a piercing the separator 222, which is conducive to reducing the short-circuit risk of electrode assembly 22.

According to some embodiments of the present application, as shown in FIGs. 4, 6, and 8, both sides of the extension section 2211a in the thickness direction Y of the porous current collector are provided with the insulation layers 224.

Herein, in the thickness direction Y of the porous current collector, both sides of the negative electrode sheet 221 are provided with the positive electrode sheets 223. Correspondingly, both sides of the extension section 2211a in the thickness direction Y of the porous current collector are provided with the insulation layers 224. That is to say, in the thickness direction Y of the porous current collector, the insulation layers 224 are provided between the extension section 2211a and the adjacent two separators 222.

By setting the insulation layers 224 on both sides of the extension section 2211a along the thickness direction Y of the porous current collector, the insulation layers 224 can cover both sides of the extension sections 2211a in the thickness direction Y of the porous current collector. On the one hand, it can block lithium ions from both sides of the extension section 2211a to reduce the phenomenon of lithium ions entering the extension section 2211a for deposition, and on the other hand, it can block the lithium metal dendrites deposited on both sides of extension section 2211a, so as to further alleviate the risk of the separator 222 being pierced by the lithium metal dendrites, and thus further improving the use safety of the electrode assembly 22.

According to some embodiments of the present application, as shown in FIG. 6, along the thickness direction Y of the porous current collector, the thickness of the insulation layer 224 is D₁, satisfying 1 µm ≤ D₁ ≤ 10 µm.

For example, the thickness D₁ of the insulation layer 224 can be 1 µm, 2 µm, 3 µm, 5 µm, 8 µm, 10 µm, or the like.

By setting the thickness of the insulation layer 224 on the side of the extension section 2211a in the thickness direction Y of the porous current collector to 1 µm to 10 µm, on the one hand, it can alleviate the phenomenon of the insulation layer 224 having poor blocking effect on the lithium ions and the lithium metal dendrites due to the thickness of the insulation layer 224 being too small, and can also alleviate the problem of excessive manufacturing difficulty due to the thickness of the insulation layer 224 being too small; and on the other hand, it can alleviate the phenomenon of the gap between the coating layer 2231 and the porous collector 2211 being too large due to the thickness of the insulation layer 224 being too large, effectively alleviating the phenomenon of excessive internal resistance and lithium deposition in the electrode assembly 22.

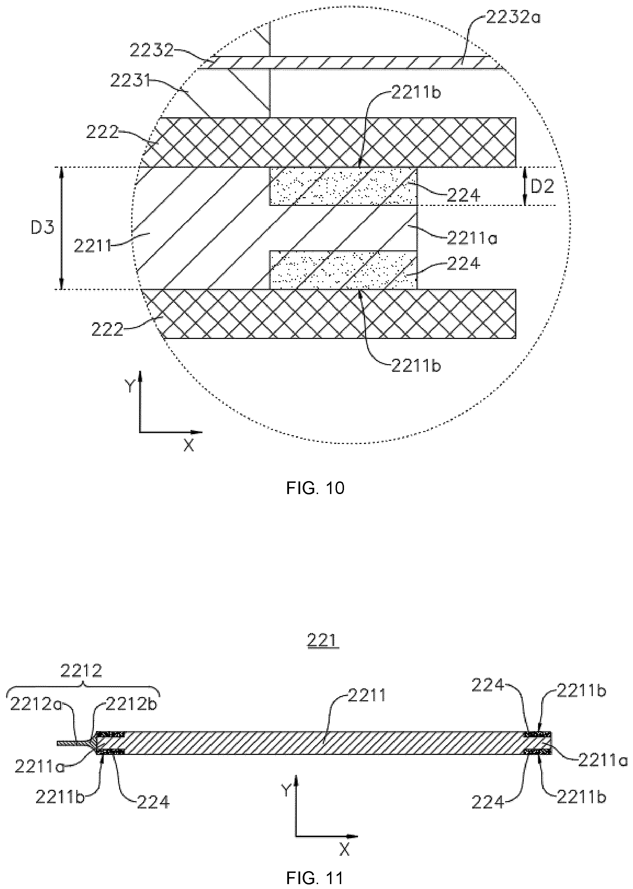

According to some embodiments of the present application, with reference to FIGs. 9 and 10, FIG. 9 is a partial cross-sectional view of the electrode assembly provided in still other embodiments of the present application; and FIG. 10 is a partial enlarged view at B of the electrode assembly shown in FIG. 9. The insulation layer 224 covers the surface of at least part of the metal of the extension section 2211a.

Herein, the insulation layer 224 covers the surface of at least part of the metal of the extension section 2211a, that is, the insulation layer 224 is filled in the extension section 2211a, so that the insulation layer 224 can cover the metal in the extension section 2211a.

Optionally, the insulation layer 224 can cover part of the metal of the extension section 2211a, or cover all of metal of the extension section 2211a.

By setting the insulation layer 224 to cover the surface of at least part of the metal of the extension section 2211a, that is to say, the insulation layer 224 is filled in the extension section 2211a, so that the insulation layer 224 can cover the metal of the extension section 2211a, thereby achieving that the insulation layer 224 covers the extension section 2211a of the porous current collector 2211. The electrode assembly 22 using this structure can have a good barrier effect on the lithium ions through the insulation layer 224, so as to alleviate the phenomenon of the lithium ion deposition after contacting the metal of the extension section 2211a, thereby reducing the phenomenon of the growth of the lithium metal dendrites in the extension section 2211a, further reducing the short-circuit risk between the positive electrode sheet 223 and the negative electrode sheet 221.

According to some embodiments of the present application, refer to FIGs. 9 and 10, and further refer to FIG. 11, which is a cross-sectional view of the negative electrode sheet 221 of the electrode assembly 22 provided in some further embodiments of the present application. The extension section 2211a has a first surface 2211b facing the coating layer 2231, and along the thickness direction Y of the porous current collector, the insulation layer 224 extends from the first surface 2211b to the interior of the extension section 2211a.

Herein, the insulation layer 224 extends from the first surface 2211b to the interior of the extension section 2211a, that is, the insulation layer 224 first covers the metal on the surface of the extension section 2211a facing the coating layer 2231, and then extends from the surface of the extension section 2211a facing the coating layer 2231 to the interior of the extension section 2211a, so as to cover the metal inside the extension section 2211a.

By setting the insulation layer 224 as a structure that extends from the first surface 2211b of the extension section 2211a to the interior of the extension section 2211a, the insulation layer 224 can cover the metal on the first surface 2211b of the extension section 2211a, so as to suppress the phenomenon of lithium metal deposition after contacting with the lithium ions on the first surface 2211b of the extension section 2211a, and it can also have a certain barrier effect on the lithium metal dendrites deposited inside the extension section 2211a, thereby further improving the use safety of the electrode assembly 22.

According to some embodiments of the present application, as shown in FIG.s 10 and 11, the extension section 2211a has first surfaces 2211b on both sides of the thickness direction Y of the porous current collector, and the extension section 2211a is provided with two insulation layers 224, which extend from the two first surfaces 2211b to the interior of the extension section 2211a.

Herein, two insulation layers 224 extend from two first surfaces 2211b to the interior of the extension section 2211a, that is, in the thickness direction Y of the porous current collector, the insulation layers 224 are set on both sides of the extension section 2211a, and the two insulation layers 224 extend from the surfaces on both sides of the extension section 2211a to the interior of the extension section 2211a.

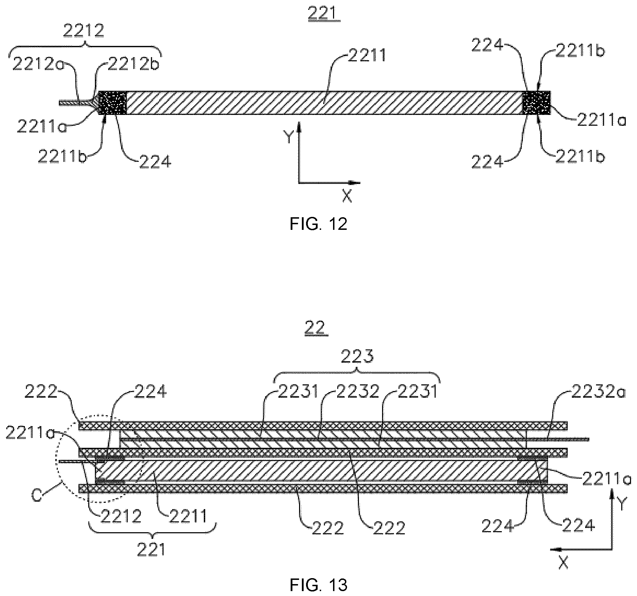

As an example, in FIG. 11, the insulation layers 224 provided on two first surfaces 2211b of the extension section 2211a both extend from the first surfaces 2211b to the interior of the extension section 2211a, and there is a gap between the two insulation layers 224 in the thickness direction Y of the porous current collector, that is, two insulation layers 224 cooperate to cover part of the metal of the extension section 2211a. Certainly, in some embodiments, referring to FIG. 12, which is a cross-sectional view of the negative electrode sheet 221 of the electrode assembly 22 provided in still other embodiments of the present application, the two insulation layers 224 extend from the two first surfaces 2211b of the extension section 2211a to the interior of the extension section 2211a, and the two insulation layers 224 are connected to each other. That is to say, the two insulation layers 224 cooperate to cover all of the metal of the extension section 2211a.

By setting the insulation layers 224 on both first surfaces 2211b along the thickness direction Y of the porous current collector in the extension section 2211a, and extending the two insulation layers 224 from the interior of the extension section 2211a along the thickness direction Y of the porous current collector, the insulation layers 224 can cover both sides of the extension section 2211a in the thickness direction Y of the porous current collector. On one hand, it can suppress the phenomenon of lithium metal deposition on the two first surfaces 2211b of extension section 2211a after contacting with the lithium ions, so as to alleviate the growth of the lithium metal dendrites on the two first surfaces 2211b of the extension section 2211a in the thickness direction Y of the porous current collector; and on the other hand, it can block the lithium metal dendrites deposited inside the extension section 2211a from both sides of the extension section 2211a, so as to further alleviate the risk of the separator 222 being pierced by the lithium metal dendrites, and thereby further improving the use safety of the electrode assembly 22.

According to some embodiments of the present application, as shown in FIGs. 10 and 11, along the thickness direction Y of the porous current collector, the extension depth of the insulation layer 224 is D₂, and the thickness of the extension section 2211a is D₃, satisfying: 1 µm ≤ D₂ ≤ D₃/2.

Herein, 1 µm ≤ D₂ ≤ D₃/2, that is, in the thickness direction Y of the porous current collector, the depth of the insulation layer 224 filled in the extension section 2211a is between 1µm and half of the extension section 2211a. When the extension depth D₂ of the two insulation layers 224 set on the two first surfaces 2211b of the extension section 2211a in the thickness direction Y of the porous current collector is D₃/2, the two insulation layers 224 cooperate to cover all of the metal of the extension section 2211a.

By setting the extension depth of the insulation layer 224 within the extension section 2211a between 1 µm and half of the thickness of the extension section 2211a, on the one hand, it can alleviate the problem of lithium metal dendrites deposited on the extension section 2211a easily growing and extending beyond the first surface 2211b due to the insufficient extension depth of the insulation layer 224, and also alleviate the large manufacturing difficulty due to the extension depth of the insulation layer 224 being too small; and on the other hand, it can alleviate the phenomenon of interference between the insulation layers 224 set on both sides of the extension section 2211a due to the excessive extension depth of the insulation layer 224, and reduce the waste of the insulation layer 224.

According to some embodiments of the present application, as shown in FIGs. 5 and 8, along the first direction X, both ends of the porous current collector 2211 have extension sections 2211a, and each extension section 2211a corresponds to an insulation layer 224.

Herein, both ends of the porous current collector 2211 have extension sections 2211a, that is, in the first direction X, both ends of the porous current collector 2211 extend beyond the coating layer 2231 of the positive electrode sheet 223.

The porous current collector 2211 forms extension sections 2211a at both ends in the first direction X, that is, both ends of the porous current collector 2211 in the first direction X extend beyond the coating layer 2231, thereby on the one hand, ensuring the coverage effect of the porous current collector 2211 on the coating layer 2231 in the thickness direction Y of the porous current collector, alleviating the lithium deposition phenomenon of the electrode assembly 22; and on the other hand, by setting insulation layers 224 on both ends of the porous current collector 2211 beyond the extension section 2211a of the coating layer 2231, it can provide a certain coverage effect on both ends of the porous current collector 2211, so as to alleviate the phenomenon of lithium metal dendrites depositing at both ends of the porous current collector 2211.

According to some embodiments of the present application, the elastic modulus of the insulation layer 224 is E, satisfying E ≥ 1Gpa. The value of the elastic modulus of the insulation layer 224 can be found in the national standard and will not be repeated here.

An insulation layer 224 with an elastic modulus greater than or equal to 1 GPa is used, and this insulation layer 224 has good strength and toughness. On the one hand, it can effectively reduce the occurrence of damage to the insulation layer 224 during use, thereby improving the service life of the electrode assembly 22; and on the other hand, it can have a good blocking effect on the lithium metal dendrites, which is conducive to reducing the phenomenon of the insulation layer 224 being pierced by the lithium metal dendrites, thereby effectively reducing the risk of using the battery cell 20.

In some embodiments, the insulation layer 224 is an insulating tape or an insulating coating.

Herein, if the insulation layer 224 is an insulation tape, it can be blue adhesive tape or green adhesive tape, etc., and the insulation layer 224 is connected to the extension section 2211a of the porous current collector 2211 or the separator 222 by means of bonding; if the insulation layer 224 is an insulation coating, it can be an epoxy resin type insulation paint or an alumina ceramic coating, etc. The insulation layer 224 is connected to the extension section 2211a of the porous current collector 2211 or the separator 222 by means of coating, and its elastic modulus can be seen in the table below.

| material | blue adhesive | green adhesive | epoxy resin type insulation paint | alumina ceramic coating |
|---|---|---|---|---|
| elastic modulus /GPa | ≥1 | ≥1 | ≥2 | ≥1 |

It should be noted that in the embodiment where the insulation layer 224 is set on the side of the extension section 2211a of the porous current collector 2211 facing the coating layer 2231 in the thickness direction Y of the porous current collector, the insulation layer 224 can be an insulation tape or an insulation coating, so that the insulation layer 224 can be connected to the surface of the extension section 2211a facing the coating layer 2231 or the surface of the separator 222 facing the extension section 2211a by means of bonding or coating, etc.; in the embodiment where the insulation layer 224 covers at least part of the metal surface of the extension section 2211a, the insulation layer 224 can be an insulation coating, so that it can be filled in the extension section 2211a, thereby achieving coverage of at least part of the metal of the extension section 2211a.

The Insulation tape or the insulation coating is used as the insulation layer 224 to cover the extension section 2211a of the porous current collector 2211. In this structure, the insulation layer 224 only needs to be bonded or coated on the extension section 2211a of the porous current collector 2211, which is convenient for assembling the electrode assembly 22 and beneficial for improving the production efficiency of the electrode assembly 22.

According to some embodiments of the present application, as shown in FIGs. 5 and 8, along the thickness direction Y of the porous current collector, the maximum thickness of the first tab 2212 is smaller than the thickness of the porous current collector 2211.

Herein, the maximum thickness of the first tap 2212 is smaller than the thickness of the porous current collector 2211, that is, the thickness of the first tab 2212 at any position in the thickness direction Y of the porous current collector is smaller than the thickness of the porous current collector 2211.

By setting the maximum thickness of the first tab 2212 in the thickness direction Y of the porous current collector to be less than the thickness of the porous current collector 2211, on the one hand, it facilitates the subsequent assembly and connection of the first tab 2212 with other components, and on the other hand, in the production process of the electrode assembly 22, when setting the porous current collector 2211 of the negative electrode sheet 221 to have an extension section 2211a beyond the coating layer 2231 in the first direction X, it is convenient to effectively distinguish the porous current collector 2211 and the first tab 2212, so as to improve the manufacturing accuracy of the electrode assembly 22.

According to some embodiments of the present application, please continue to refer to FIGs. 5 and 8. The porous current collector 2211 is integrated with the first tab 2212 which is connected to the end of the extension section 2211a in the first direction X away from the coating layer 2231. The first tab 2212 includes a main section 2212a and a transition section 2212b. Along the first direction X, the transition section 2212b is connected between the main section 2212a and the extension section 2211a, and the thickness of the transition section 2212b in the thickness direction Y of the porous current collector gradually increases from the end near the main section 2212a to the end near the extension section 2211a.

Herein, the first tab 2212 is a structure formed by rolling and other processes on the end of the negative electrode sheet 221 in the first direction X, so that the negative electrode sheet 221 is formed with the porous current collector 2211 and the first tab 2212, which protrudes from the end of the porous current collector 2211 in the first direction X and has a smaller thickness, that is, the first tab 2212 is formed with the main body section 2212a and the transition section 2212b which is connected between the main body section 2212a and the porous current collector 2211. The main body section 2212a is used to connect to the negative electrode terminal. In this embodiment, it is only necessary to set the insulation layer 224 to cover the part of the negative electrode sheet 221 that has not been compressed by rolling (i.e. porous current collector 2211).

It should be noted that in the embodiment where the porous current collector 2211 are integrated with the first tab 2212, as shown in FIGs. 5 and 8, if the insulation layer 224 is set on the side of the extension section 2211a facing the coating layer 2231, it is only necessary to set the insulation layer 224 to cover the area of the porous current collector 2211 where the thickness does not decrease and extends beyond the coating layer 2231 in the first direction X; as shown in FIGs. 9 and 11, if the insulation layer 224 is set to cover the surface of at least part of the metal of the extension section 2211a, it is only necessary to fill the insulation layer 224 in the area of the porous current collector 2211 where the thickness does not decrease and extends beyond the coating layer 2231 in the first direction X.

By setting the porous current collector 2211 and the first tab 2212 as an integrated structure, the first tab 2212 is formed with the main body section 2212a and the transition section 2212b which is connected between the main body section 2212a and the extension section 2211a of the porous current collector 2211, wherein the thickness of the transition section 2212b in the thickness direction Y of the porous current collector gradually increases from the end near the main body section 2212a to the end near the extension section 2211a of the porous current collector 2211, so that the first tab 2212 can protrude from one end of the porous current collector 2211. The negative electrode sheet 221 adopting this structure can effectively improve the structural strength of the first tab 2212 and the connection strength between the first tab 2212 and the porous current collector 2211.

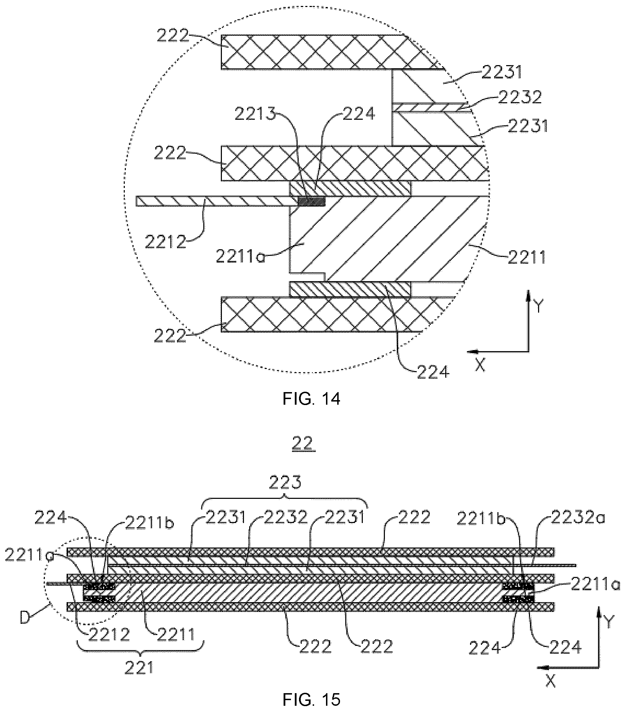

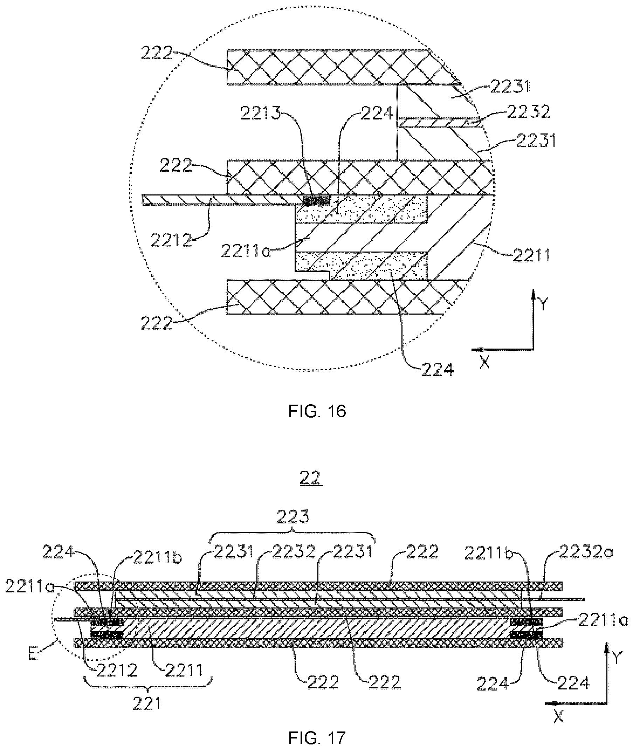

According to some embodiments of the present application, referring to FIGs. 13 to 16, FIG. 13 is a partial sectional view of the electrode assembly 22 provided in still other embodiments of the present application, FIG. 14 is a partial enlarged view at C of the electrode assembly 22 shown in FIG. 13, FIG. 15 is a partial sectional view of the electrode assembly 22 provided in some other embodiments of the present application, and FIG. 16 is a partial enlarged view at D of the electrode assembly 22 shown in FIG 15. The porous current collector 2211 and the first tab 2212 are in separate structures. The first tab 2212 is connected to the side of the extension section 2211a in the thickness direction Y of the porous current collector, and along the first direction X, the first tab 2212 protrudes from the end of the extension section 2211a away from the coating layer 2231.

Herein, the first tab 2212 and the porous current collector 2211 are in separate structures, that is, the first tab 2212 and the porous current collector 2211 are independent components. The first tab 2212 is connected to the extension section 2211a of the porous current collector 2211 on the side of the thickness direction Y of the porous current collector, and extends out of the end of the porous current collector 2211 along the first direction X. In this embodiment, the first tab 2212 and the porous current collector 2211 have overlapping regions in the thickness direction Y of the porous current collector, and part of the first tab 2212 is connected to the porous current collector 2211 and extends out of the end of the porous current collector 2211along the first direction X.

For example, the first tab 2212 is welded to the extension section 2211a of the porous current collector 2211 and forms a welding mark 2213.

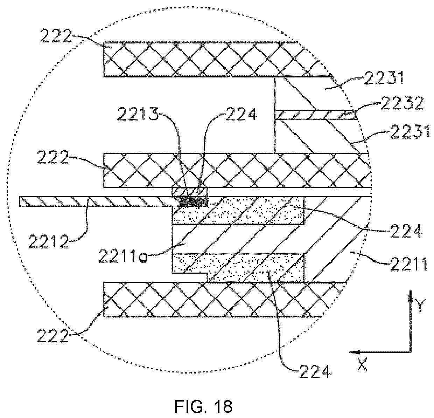

It should be noted that in the embodiment where the porous current collector 2211 and the first tab 2212 are in separate structures, as shown in FIG.s 13 and 14, if the insulation layer 224 is provided on the side of the extension section 2211a facing the coating layer 2231, it is necessary to set the insulation layer 224 to cover the part of the porous current collector 2211 beyond the coating layer 2231 in the first direction X, as shown in FIGs. 13 and 14, and enable the insulation layer 224 to cover the area where the first tab 2212 and the porous current collector 2211 are stacked and connected to form a welding mark 2213; as shown in FIGs. 15 and 16, if the insulation layer 224 is set to cover the surface of at least part of the metal of the extension section 2211a, it is only necessary to set the insulation layer 224 to cover the metal of the porous current collector 2211 beyond the coating layer 2231 in the first direction X, and there is no need to cover the welding mark 2213 formed by welding of the first tab 2212 and the extension section 2211a of the porous collector 2211. Certainly, in some embodiments, referring to FIGs. 17 and 18, FIG. 17 is a partial sectional view of the electrode assembly 22 provided in some further embodiments of the present application, and FIG. 18 is a local enlarged view at E of the electrode assembly 22 shown in FIG. 17. It is also possible to provide the insulation layer 224 on the surface of the welding mark 2213 formed by welding of the first tab 2212 and the extension section 2211a of the porous current collector 2211, and enable the insulation layer 224 to also cover the welding mark 2213 formed by the welding of the first tab 2212 and the extension section 2211a of the porous current collector 2211.

By setting the porous current collector 2211 and the first tab 2212 as separate structures, and connecting the first tab 2212 to the extension section 2211a of the porous current collector 2211 on the side of the porous current collector in the thickness direction Y, and then protruding from the end of the extension section 2211a away from the coating layer 2231 along the first direction X, the first tab 2212 protrudes from the end of the porous current collector 2211. The manufacturing difficulty of the negative electrode sheet 221 in this structure is relatively low, which is conducive to improving the production efficiency of the electrode assembly 22.

According to some embodiments of the present application, as shown in FIGs. 4 and 5, the electrode assembly 22 is a winding electrode assembly 22, and the first direction X is consistent with a direction of a winding axis of the electrode assembly 22.

Herein, the electrode assembly 22 is a winding structure, so that the first direction X is an extension direction of the winding axis of the electrode assembly 22, that is, the plane of the winding direction of the electrode assembly 22 is perpendicular to the first direction X, and the thickness direction Y of the porous current collector is the radial direction of the electrode assembly 22.

By setting the electrode assembly 22 in a winding structure, and aligning the first direction X with the direction of the winding axis of the electrode assembly 22, the electrode assembly 22 with this structure is easy to manufacture and produce, which is conducive to reducing the phenomenon of misalignment between the positive electrode sheet 223 and the negative electrode sheet 221.

According to some embodiments of the present application, the porous current collector 2211 is made of foam metal.

As an example, the porous current collector 2211 is made of foam copper. Certainly, in other embodiments, the porous current collector 2211 can also be made of foam nickel or the like. The use of foam copper as the material of the porous collector 2211 can make the porous collector 2211 have good conductivity, which is conducive to reducing the internal resistance of the electrode assembly 22 with this negative electrode sheet 221, so as to improve the usage performance of the battery cell 20.

The porous current collector 2211 made of the foam metal enables the porous current collector 2211 to have the function of directly reacting with the lithium ions, so as to realize the electric energy input or output of the negative electrode sheet 221. Moreover, the porous current collector 2211 with this structure can realize the deposition of the lithium ions inside the porous current collector 2211, which is conducive to reducing the risk of the lithium metal deposition on the surface of the porous current collector 2211.

According to some embodiments of the present application, the present embodiment also provides a battery cell 20, which includes a shell 21 and an electrode assembly 22 of any of the above solutions, and the electrode assembly 22 is accommodated inside the shell 21.

According to some embodiments of the present application, the present embodiment also provides a battery 100, which includes the battery cell 20 of any of the above solutions.

According to some embodiments of the present application, the present embodiment also provides an electrical device, which includes the battery cell 20 of any of the above solutions, and the battery cell 20 is used to provide electricity to the electrical device.

The electrical device can be any of the aforementioned devices or systems that use the battery cell 20.

According to some embodiments of the present application, as shown in FIGs. 3 to 8, the present application provides an electrode assembly 22, which includes a negative electrode sheet 221, a separator 222, a positive electrode sheet 223, and an insulation layer 224. The separator 222 is set between the negative electrode sheet 221 and the positive electrode sheet 223 to separate the negative electrode sheet 221 and the positive electrode sheet 223. The positive electrode sheet 223 includes a matrix 2232 and a coating layer 2231 coated on both sides of the matrix 2232. Along the first direction X, one end of the matrix 2232 extends out of the coating layer 2231 to form a second sheet 2232a. The negative electrode sheet 221 includes a porous current collector 2211 and a first electrode sheet 2212 connected to an end of the porous current collector 2211 in the first direction X. Along the thickness direction Y of the porous current collector, the porous current collector 2211 faces the coating layer 2231, and along the first direction X, both ends of the porous current collector 2211 extent beyond the coating layer 2231 and form an extension section 2211a. The first direction X is perpendicular to the thickness direction Y of the porous current collector. The porous current collector 2211 and the first tab 2212 are in an integrated structure. The first tab 2212 includes a main section 2212a and a transition section 2212b. Along the first direction X, the transition section 2212b is connected between the main section 2212a and the extension section 2211a, and the thickness of the transition section 2212b in the thickness direction Y of the porous current collector gradually increases from the end near the main section 2212a to the end near the extension section 2211a. The insulation layer 224 is provided on a side of the extension section 2211a facing the coating layer 2231, and the insulation layer 224 is connected to the surface of the extension section 2211a. Along the thickness direction Y of the porous current collector, the projection of the insulation layer 224 on the porous current collector 2211 completely covers the extension section 2211a, and the insulation layer 224 does not overlap with the coating layer 2231. Along the thickness direction Y of the porous current collector, the thickness of the insulation layer 224 is D₁, satisfying 1 µm ≤ D₁ ≤ 10 µm.

It should be noted that the embodiments in the present application and the features of the embodiments may be combined with each other on a non-conflict basis.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. An electrode assembly, comprising:
a positive electrode sheet, comprising a coating layer;
a negative electrode sheet, comprising a porous current collector and a first tab connected to at least one end of the porous current collector, wherein the porous current collector faces the coating layer along a thickness direction of the porous current collector, and the porous current collector is provided with at least one extension section beyond the coating layer along a first direction, wherein the first direction is perpendicular to the thickness direction of the porous current collector; and
at least one insulation layer, provided correspondingly to the extension section, wherein a projection of the insulation layer on the porous current collector covers part or all of the extension section.

2. The electrode assembly according to claim 1, wherein the projection of the insulation layer completely covers the extension section along the thickness direction of the porous current collector.

3. The electrode assembly according to claim 2, wherein the insulation layer does not overlap with the coating layer along the thickness direction of the porous current collector.

4. The electrode assembly according to any one of claims 1-3, wherein the insulation layer is provided on a side of the extended section facing the coating layer, along the thickness direction of the porous current collector.

5. The electrode assembly according to claim 4, wherein the insulation layer is connected to a surface of the extended section facing the coating layer.

6. The electrode assembly according to claim 4, further comprising:
a separator, provided between the negative electrode sheet and the positive electrode sheet to separate the negative electrode sheet from the positive electrode sheet,
wherein the insulation layer is connected to a surface of the separator facing the extension section.

7. The electrode assembly according to any one of claims 4-6, wherein the insulation layer is provided at both sides of the extension section in the thickness direction of the porous current collector.

8. The electrode assembly according to any one of claims 4-7, wherein the thickness of the insulation layer along the thickness direction of the porous current collector is D₁, satisfying 1 µm ≤ D₁ ≤ 10 µm

9. The electrode assembly according to any one of claims 1-3, wherein the insulation layer covers a surface of at least part of metal of the extension section.

10. The electrode assembly according to claim 9, wherein the extension section has a first surface facing the coating layer, and the insulation layer extends from the first surface to an interior of the extension section along the thickness direction of the porous current collector.

11. The electrode assembly according to claim 10, wherein the first surface is provided on both sides of the extension section in the thickness direction of the porous current collector, and the extension section is provided with two insulation layers, which extend from the first surface to the interior of the extension section, respectively.

12. The electrode assembly according to claim 11, wherein an extension depth of the insulation layer along the thickness direction of the porous current collector is D₂, and a thickness of the extension section is D₃, satisfying 1 µm ≤ D₂ ≤ D₃/2.

13. The electrode assembly according to any one of claims 1-12, wherein two extension sections are provided at both ends of the porous current collector along the first direction, and each extension section is correspondingly provided with the insulation layer.

14. The electrode assembly according to any one of claims 1-13, wherein an elastic modulus of the insulation layer is E, satisfying E ≥ 1 Gpa.

15. The electrode assembly according to any one of claims 1-14, wherein the insulation layer is an insulating tape or an insulating coating.

16. The electrode assembly according to any one of claims 1-15, wherein a maximum thickness of the first tab along the thickness direction of the porous current collector is less than the thickness of the porous collector.

17. The electrode assembly according to claim 16, wherein the porous current collector and the first tab are in an integrated structure, and the first tab is connected to an end of the extension section away from the coating layer in the first direction,
wherein the first tab comprises a main body section and a transition section, wherein the transition section is connected between the main body section and the extension section along the first direction, and a thickness of the transition section in the thickness direction of the porous current collector gradually increases from an end close to the main body section to an end close to the extension section.

18. The electrode assembly according to claim 16, wherein the porous current collector and the first tab are in separate structures, wherein the first tab is connected to an side of the extension section in the thickness direction of the porous current collector, and the first tab protrudes from the end of the extension section away from the coating layer along the first direction.

19. The electrode assembly according to any one of claims 1-18, wherein the electrode assembly is a winding electrode assembly, and the first direction is consistent with a direction of a winding axis of the electrode assembly.

20. The electrode assembly according to any one of claims 1-19, wherein the porous current collector is made of foam metal.

21. A battery cell, comprising:
a shell; and
the electrode assembly according to any one of claims 1-20, wherein the electrode assembly is accommodated in the shell.

22. A battery, comprising the battery cell as claimed in claim 21.

23. An electrical device, comprising the battery cell as claimed in claim 21.
